# EUROPEAN PATENT APPLICATION

(11) **EP 4 769 614 A1**
(43) Date of publication of application: **01.07.2026**
(21) Application number: 24865214.1
(22) Date of filing: 26.08.2024
(51) Int. Cl.: H01M 10/0562, H01M 10/052

(54) **SOLID ELECTROLYTE BASE MATERIAL, SOLID ELECTROLYTE, SECONDARY BATTERY, AND METHOD FOR MANUFACTURING SOLID ELECTROLYTE BASE MATERIAL**

(30) Priority: 13.09.2023 JP 2023148390
(71) Applicant: Canon Kabushiki Kaisha, Ohta-Ku Tokyo 1468501 (JP)
(72) Inventor: AOTANI, Takaharu, Tokyo 146-8501 (JP); KUBO, Kenta, Tokyo 146-8501 (JP); MASADA, Yohei, Tokyo 146-8501 (JP); TANIUCHI, Hiroshi, Tokyo 146-8501 (JP); USAMI, Hirokazu, Tokyo 146-8501 (JP); NAKAZAWA, Ikuo, Tokyo 146-8501 (JP)
(74) Representative: WESER & Kollegen Patentanwälte PartmbB
(86) International application number: PCT/JP2024/030247
(87) International publication number: WO 2025/057710

(57) **Abstract**

An easy-to-handle solid electrolyte base material for obtaining solid electrolytes with high ionic conductivity and suppressed short circuits. The solid electrolyte base material is used in the manufacture of a solid electrolyte, and includes: a base; a first particle portion which is elastically held on the base by an adhesive; and a second particle portion which is held by being stacked with respect to the first particle portion and which includes a green compact of a solid electrolyte particle.

## Description

### TECHNICAL FIELD

The present disclosure relates to a solid electrolyte base material, a solid electrolyte, a secondary battery, and a manufacturing method of a solid electrolyte base material.

### BACKGROUND ART

Generally, a secondary battery is constituted of electrodes (positive and negative) and an electrolyte, and charging and discharging occur through the movement of ions between the electrodes via the electrolyte. Such secondary batteries are used in a wide range of applications from small devices like mobile phones to large equipment such as electric vehicles. Therefore, further improvements in the performance of secondary batteries are required.

In recent years, research and development has advanced on so-called all-solid-state batteries that use inorganic solid electrolytes. All-solid-state batteries are expected to enhance the safety and achieve higher capacity and output of secondary batteries by replacing conventional organic electrolytic solutions with solid electrolytes. When inorganic solid electrolytes are used in secondary batteries in this manner, ionic conductivity tends to be lower due to higher contact resistance, and short circuits are likely to occur.

To solve such problems, PTL 1 discloses an all-solid-state battery obtained by heat-treating a laminated body formed by stacking a solid electrolyte sheet, produced by coating a PET film with a solid electrolyte slurry and drying the PET film, and an active material.

In addition, PTL 2 discloses a manufacturing method of a solid battery material capable of uniformly filling and pressing a solid electrolyte powder as a starting material to any desired thickness and forming a compacted-powder solid electrolyte layer.

### CITATION LIST

### PATENT LITERATURE

[PTL 1] Japanese Patent Application Publication No. 2014-212022
[PTL 2] Japanese Patent Application Publication No. 2012-221887

### SUMMARY OF INVENTION

### TECHNICAL PROBLEM

However, studies carried out by the present inventors revealed that coating a PET film with a solid electrolyte slurry and drying the PET film as described in PTL 1 resulted in a thick coating layer of the solid electrolyte after drying of 250 µm and that the ionic conductivity of the solid electrolyte was insufficient. In addition, as described in PTL 2, the compacted-powder solid electrolyte layer press-molded to a thickness of approximately 50 µm to 60 µm was brittle, making it difficult to handle and unsuitable for practical use.

Therefore, an object of the present disclosure is to provide an easy-to-handle solid electrolyte base material for obtaining solid electrolytes with high ionic conductivity and suppressed short circuits.

### SOLUTION TO PROBLEM

According to at least one aspect of the present disclosure, a solid electrolyte base material used in manufacture of a solid electrolyte, the solid electrolyte base material comprising:
a base;
a first particle portion elastically held on the base by an adhesive; and
a second particle portion which is stacked and held with respect to the first particle portion and which comprises a green compact of a solid electrolyte particle can be provided.

According to at least one aspect of the present disclosure, a solid electrolyte base material used in manufacture of a solid electrolyte, the solid electrolyte base material comprising:
a base;
a layer of adhesive on the base;
a first particle portion dispersed in and held by the adhesive; and
a second particle portion which is stacked and held with respect to the first particle portion and which comprises a green compact of a solid electrolyte particle can be provided.

According to at least one aspect of the present disclosure, a solid electrolyte obtained by removing at least a part of the base from the above-mentioned solid electrolyte base material can be provided.

According to at least one aspect of the present disclosure, a secondary battery comprising a solid electrolyte and electrodes arranged in the solid electrolyte, wherein
the solid electrolyte is the above-mentioned solid electrolyte can be provided.

Furthermore, according to at least one aspect of the present disclosure, a manufacturing method of a solid electrolyte base material in which a base, an adhesive, a first particle portion, and a second particle portion are stacked in this order,
the second particle portion comprising a solid electrolyte particle,
the manufacturing method comprising:
   a preparation step of preparing the base comprising the adhesive;
   a first step of arranging a first particle on a surface of the adhesive;
   a second step of fabricating the first particle portion by applying pressure to the first particle;
   a third step of arranging a second particle on the surface of the first particle portion; and
   a fourth step of fabricating the second particle portion by applying pressure to the second particle and obtaining the solid electrolyte base material can be provided.

Furthermore, according to at least one aspect of the present disclosure, a manufacturing method of a solid electrolyte base material in which a base, an adhesive, and a particle portion are stacked in this order, the manufacturing method comprising:
a step of preparing the base comprising the adhesive;
a step of arranging a solid electrolyte particle on a surface of the adhesive; and
a step of fabricating the particle portion by applying pressure to the solid electrolyte particle and obtaining the solid electrolyte base material can be provided.

### ADVANTAGEOUS EFFECTS OF INVENTION

According to at least one aspect of the present disclosure, an easy-to-handle solid electrolyte base material for obtaining solid electrolytes with high ionic conductivity and suppressed short circuits is provided.

### BRIEF DESCRIPTION OF DRAWINGS

[FIG. 1] FIG. 1 is a conceptual diagram showing a solid electrolyte base material.
[FIG. 2] FIG. 2 is a conceptual diagram showing a manufacturing method of a solid electrolyte base material.
[FIG. 3] FIG. 3 is a diagram schematically showing an apparatus using a roll in the manufacturing method of a solid electrolyte base material.
[FIG. 4] FIG. 4 is a diagram schematically showing an apparatus using a press in the manufacturing method of a solid electrolyte base material.
[FIG. 5] FIG. 5 is a diagram schematically showing an apparatus using a roll when a first particle and a second particle are the same in the manufacturing method of a solid electrolyte base material.
[FIG. 6] FIG. 6 is a diagram schematically showing an apparatus using a press when a first particle and a second particle are the same in the manufacturing method of a solid electrolyte base material.
[FIG. 7] FIG. 7 is a diagram schematically showing an apparatus using a base coated with an adhesive in the manufacturing method of a solid electrolyte base material.
[FIG. 8] FIG. 8 is a diagram schematically showing an apparatus using a base coated with an adhesive in the manufacturing method of a solid electrolyte base material.
[FIG. 9] FIG. 9 is a diagram schematically showing a configuration of a sintering treatment apparatus that removes a base.
[FIGS. 10] FIGS. 10A and 10B are an SEM image of a base material and a binarized image of the base material.
[FIG. 11] FIG. 11 is a graph showing calculated area ratios.

### DESCRIPTION OF EMBODIMENTS

In the present disclosure, "from XX to YY" or "XX to YY" indicating a numerical range means a numerical range including a lower limit and an upper limit that are end points unless otherwise specified. In a case where numerical ranges are described in stages, an upper limit and a lower limit of each numerical range can be combined as desired. Furthermore, in the present disclosure, for example, description such as "at least one selected from the group consisting of XX, YY, and ZZ" means any of XX, YY, ZZ, a combination of XX and YY, a combination of XX and ZZ, a combination of YY and ZZ, or a combination of XX, YY, and ZZ.

When an inorganic solid electrolyte is used as an electrolyte, the electrolyte is in a solid state during contact and makes it difficult to obtain a sufficient contact area, thereby hindering the construction of conductive paths on an interface and creates a problem of short circuits. While the contact area can be increased by increasing a solid electrolyte mass, this results in increased thickness, leading to a decrease in ionic conductivity (an increase in resistance value).

In addressing the problems described above, the present inventors carried out a detailed examination of the composition of the solid electrolyte particle in the solid electrolyte base material. As a result of the examination, it was found that the following configuration yields a solid electrolyte layer which can be handled easily, suppresses short circuits, and has improved ionic conductivity. Specifically, the solid electrolyte base material includes: a base; a first particle portion elastically held on the base by an adhesive; and a second particle portion including a green compact of a solid electrolyte stacked on held on top of the first particle portion.

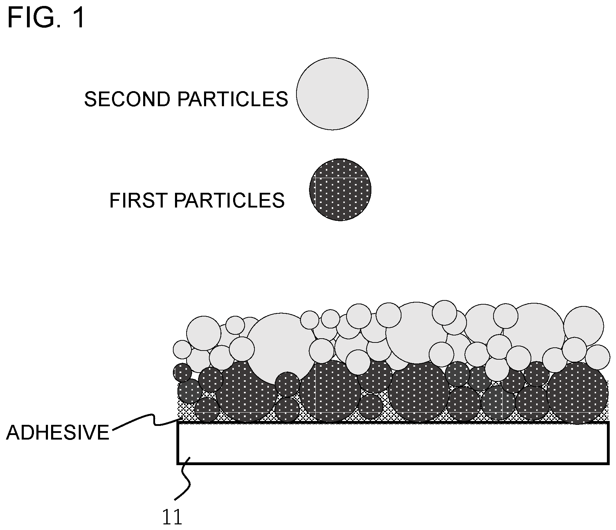

This means that the elasticity-held first particle portion and the second particle portion that is the green compact portion each play a distinct role in constituting the base material. This will be described with reference to FIG. 1. In FIG. 1, a particle portion (first particle portion) fixed to a base 11 by an adhesive contains spaces due to the adhesive. In other words, the first particle portion can adopt a layer structure in which a particle is dispersed in an adhesive. On the other hand, a particle portion constituting a green compact on top of the first particle portion is a high-density particle portion (second particle portion) with fewer spaces due to the absence of an adhesive.

One example of a method of fabricating the solid electrolyte base material involves pushing a particle portion into the base to form the base material, in which case a pushing force is applied to the first particle portion by the second particle portion. In addition, the method of forming the base material is not limited to pushing and a mass of the second particle portion also exerts a pushing force with respect to the first particle portion.

In this case, while the adhesive may contain a resin, the adhesive is capable of elastic deformation even in a cured state. Therefore, conceivably, the first particle portion fixed by the adhesive expands slightly like a spring due to the transmitted by the second particle portion, enabling the first particle portion to move against the pushing force. As a result, the first particle portion can hold the second particle portion as though biting the second particle portion. Furthermore, conceivably, space can be reduced and the second particle portion can be strongly held at an interface between the first particle portion and the second particle portion. At the same time, conceivably, the second particle portion is compressed into a state of a green compact by the pushing force and becomes a particle portion of a high-density solid electrolyte.

Therefore, "elastically held" in the present disclosure refers to a state where the first particle portion is fixed by an adhesive and is held as though biting a particle contained in the second particle portion due to a pushing force transmitted from the second particle portion.

In the solid electrolyte base material, the first particle portion being "elastically held" can be confirmed by the fact that, for example, the first particle portion is fixed to, for example, a carbon C component originating from the adhesive in a measurement by a BIB-SEM (to be described later) and, further, a green compact of the second particle portion is formed on top of the first particle portion.

In the solid electrolyte base material, in order to "elastically hold" the first particle portion, a layer of the adhesive is formed on the base, and the first particle portion dispersed and held in the adhesive is formed. In addition, the second particle portion containing a green compact of a solid electrolyte particle is preferably stacked on the first particle portion. In other words, as another aspect of the present disclosure, the solid electrolyte base material includes: a base; a layer of an adhesive on the base; a first particle portion which is dispersed and held in the adhesive; and a second particle portion which is stacked and held with respect to the first particle portion and which contains a green compact of a solid electrolyte particle.

In addition, in the solid electrolyte base material, the fact that the second particle portion has formed a "green compact" can be confirmed by an increased area ratio or, in other words, an increased density in a cross-sectional observation by a BIB-SEM (to be described later).

Preferably, in a cross-sectional observation of the solid electrolyte base material by a scanning electron microscope, let an area ratio (%) of the first particle portion be d1 and an area ratio (%) of the second particle portion be d2. Preferably, d2 is 86% or higher. More preferably, d2 ranges from 86% to 96%, and more preferably, d2 ranges from 87% to 94%.

Note that preferably, d1 ranges from 80% to 85%, and more preferably, d1 ranges from 82% to 85%.

Furthermore, with the solid electrolyte base material according to the present disclosure, only a small amount of adhesive is required to elastically hold the first particle portion, a low temperature is sufficient when, for example, removing a resin component including the base during fabrication of a solid electrolyte layer, and a density reduction effect caused by the removal can be minimized.

In order to fabricate such a solid electrolyte base material, conceivably, it is important that the base material is constituted of a first particle portion elastically held by an adhesive with respect to the base and a second particle portion constituting a green compact.

The solid electrolyte base material configured in this manner is constituted of a first particle portion and a second particle portion, with the second particle portion being densely packed. Therefore, manufacturing a solid electrolyte layer using the solid electrolyte base material according to the present disclosure reduces the likelihood of short circuits and facilitates ion conduction. In addition, in secondary batteries using such a solid electrolyte layer, internal resistance decreases and output improves.

In the present disclosure, the mode described above is achieved by using a solid electrolyte base material in which a solid electrolyte particle having the features of the present disclosure are arranged on a base. In addition, the solid electrolyte base material can be used as a material of secondary batteries. In the present disclosure, electron conductivity and ionic conductivity are evaluated using an index of a "resistance value" for the sake of convenience.

Hereinafter, a solid electrolyte base material, a solid electrolyte layer, a secondary battery using the solid electrolyte base material and the solid electrolyte layer, and a manufacturing method of the solid electrolyte base material, the solid electrolyte layer, and the secondary battery will be described in detail. The solid electrolyte base material according to the present disclosure can be used to manufacture a solid electrolyte. The solid electrolyte can be used to manufacture a secondary battery. Hereinafter, a solid electrolyte base material using a solid electrolyte particle will be described as an example.

The base may essentially be any material that constitutes a solid electrolyte base material. Preferably, the base contains resin. Using a base formed from organic materials such as resin facilitates the removal of the base by heating during a manufacturing process of the solid electrolyte layer to be described later.

Although the resin contained in the base is not particularly limited, for example, polyethylene (PE), polypropylene (PP), polyesters such as polyethylene terephthalate (PET), and polyamides such as nylon can be used. Among these resins, from the perspective of decomposition temperature and low toxicity of gases generated during thermal decomposition, the base preferably contains PET.

A thickness of the base preferably ranges from 1 to 50 µm, more preferably ranges from 1 to 20 µm, and even more preferably ranges from 2 to 10 µm.

The adhesive is preferably a resin with adhesive power. The adhesive is preferably provided in a part of or all of a surface of the base. Although a method of providing the adhesive is not particularly limited since the object of the adhesive is to elastically hold the base and the first particle portion, methods such as applying the adhesive to the surface of the base are preferable.

The adhesive is not particularly limited and any known adhesive can be used. For example, the adhesive contains a resin. The adhesive preferably has tackiness. Tackiness refers to a property that enables temporary bonding. Tackiness make it easier to elastically hold the first particle. For example, the adhesive may be an acrylic pressure sensitive adhesive, a rubber-based pressure sensitive adhesive, a silicone-based pressure sensitive adhesive, or a thermoplastic resin or a light-curable resin of which adhesive power changes due to external disturbances such as heat or light. The adhesive is more preferably a pressure sensitive adhesive. The adhesive is further preferably at least one selected from a group consisting of acrylic pressure sensitive adhesives, rubber-based pressure sensitive adhesives, and silicone-based pressure sensitive adhesives.

For example, the solid electrolyte base material includes: a base; a first particle portion which is held on the base by a pressure sensitive adhesive; and a second particle portion which is held by being stacked with respect to the first particle portion and which includes a green compact of a solid electrolyte particle.

While a thickness (thickness after curing) of the adhesive is not particularly limited, the thickness preferably ranges from 0.1 to 10 µm, more preferably ranges from 0.5 to 5 µm, and even more preferably ranges from 0.5 to 3 µm.

While the particle contained in the first particle portion is not particularly limited, the particle is preferably at least one particle selected from a group consisting of a resin particle and a solid electrolyte particle.

When the particle disappears upon heating, the particle can be easily removed during a manufacturing process of the solid electrolyte layer to be described later. The particle used in this case is preferably formed from organic materials and, although not particularly limited; the particle in the first particle portion may be the resin particle.

As the resin particle, particle of at least one resin selected from a group consisting of polyethylene (PE), polypropylene (PP), polyesters such as polyethylene terephthalate (PET), polyacrylic resins, and polyamides such as nylon can be used.

In addition, the particle in the first particle portion may be a solid electrolyte particle that form a solid electrolyte layer without disappearing upon heating. The solid electrolyte particle is not particularly limited and ion-conductive solids commonly used in all-solid-state batteries can be used.

Examples of the solid electrolyte particle includes at least one particle selected from a group consisting of Li-B oxide-based solid electrolyte particle, Li-Yb oxide-based solid electrolyte particle, NASICON-type solid electrolyte particle (LiAlTi(PO₄)₃, LiAlGe(PO₄)₃, and the like), and Li-P-O-based solid electrolyte particle (Li₃PO₄, LiPON (particle obtained by partially substituting O in Li₃PO₄ with N), and the like).

Preferably, the solid electrolyte particle contains an oxide-based solid electrolyte particle. Among the solid electrolyte particle described above, since Li-B oxide-based solid electrolyte particle and Li-Yb oxide-based solid electrolyte particle can be sintered at relatively low temperatures (700°C or lower), reactions with a positive electrode active material particle during sintering when fabricating an integrated batteries can be suppressed and ionic conductivity can be readily maintained. For this reason, the solid electrolyte particle preferably includes at least one particle selected from a group consisting of Li-B oxide-based solid electrolyte particle and Li-Yb oxide-based solid electrolyte particle.

As the solid electrolyte particle, a commercially available product may be used or a separately prepared material may be used. As the Li-B oxide-based solid electrolyte particle, for example, Li₃BO₃ (manufactured by Toshima Manufacturing Co., Ltd.) or particle in which O in Li₃BO₃ are partially substituted with C can be used. In addition, examples of the Li-Yb oxide-based solid electrolyte particle include the compounds described in Japanese Patent Application Laid-open No. 2022-130301 and, for example, Li_{5.9}Yb_{0.81}La_{0.09}Zr_{0.1}(BO₃)₃ or the like can be used. These solid electrolyte particles may be amorphized beforehand by planetary ball milling processing or the like.

A particle in the second particle portion contain a solid electrolyte particle. The solid electrolyte particle is not particularly limited and ion-conductive solids commonly used in all-solid-state batteries can be used. The solid electrolyte particle used in the first particle portion described above can be used.

In a cross-sectional observation of the solid electrolyte base material by a scanning electron microscope, when an average area ratio (%) of the first particle portion is denoted by d1 and an average area ratio (%) of the second particle portion is denoted by d2, d1 and d2 preferably differ from each other. In addition, d1 and d2 preferably satisfy d1 < d2. By differentiating d1 from d2 in this manner, gases generated from the adhesive during resin removal by heating or the like can escape more readily (preferably via the first particle portion). Therefore, the solid electrolyte is less prone to cracking and more effective at suppressing short circuits.

Area ratios of the first particle portion and the second particle portion are determined by processing cross-sections of the base, the first particle portion, and the second particle portion of the solid electrolyte base material base in the stacking direction using an Ar-based broad ion beam (BIB), and then obtaining a two-dimensional images of the cross-sections by scanning electron microscopy. In addition, a location of the adhesive can be determined by EDX analysis that involves detecting and spectrally analyzing characteristic X-rays generated by electron beam irradiation.

In the present specification, the first particle portion refers to a particle portion held by the adhesive as observed by SEM and the observation of the cross-section by EDX analysis. While the first particle portion has a distribution in a height direction (Y-direction according to an image), positions up to a maximum height of the particle held by the adhesive are defined as the first particle portion. Therefore, the second particle region is clearly defined as an adhesive-free portion through the cross-sectional observation using EDX analysis.

A difference between d1 and d2 (preferably d2 - d1) preferably represents a statistically significant difference. The difference between d1 and d2 (preferably d2 - d1) is preferably 2% or more. Accordingly, the first particle portion is more readily elastically held by the adhesive and the second particle portion is more readily fixed by the first particle portion. As a result, since the second particle portion constitute of a solid electrolyte particle can be formed with sufficiently high density, ionic conductivity can be further improved.

The difference between d1 and d2 (preferably d2 - d1) preferably ranges from 2% to 10%, and more preferably, ranges from 3% to 7%.

The difference between d1 and d2 can be increased by increasing the thickness of the adhesive. In addition, the difference between d1 and d2 can be reduced by reducing the thickness of the adhesive or reducing a change amount of the adhesive with respect to pressure.

A thickness of the first particle portion preferably ranges from 1 to 20 µm, more preferably ranges from 2 to 15 µm, and even more preferably ranges from 3 to 10 µm.

In addition, a thickness of the second particle portion is preferably 10 µm or more and less than 100 µm, more preferably ranges from 20 to 90 µm, and even more preferably ranges from 25 to 80 µm.

A total thickness of the first particle portion and the second particle portion is preferably less than 100 µm. By being within this range, a resistance of the solid electrolyte after sintering can be reduced. The total thickness of the first particle portion and the second particle portion is preferably 20 µm or more and less than 100 µm, more preferably ranges from 25 to 90 µm, and even more preferably ranges from 30 to 80 µm.

The thickness of the adhesive, the thickness of the first particle portion, and the thickness of the second particle portion in the solid electrolyte base material can be measured by observation using a BIB-SEM. An arithmetic mean value of any 10 points is adopted.

### Solid Electrolyte Base Material Manufacturing Method 1

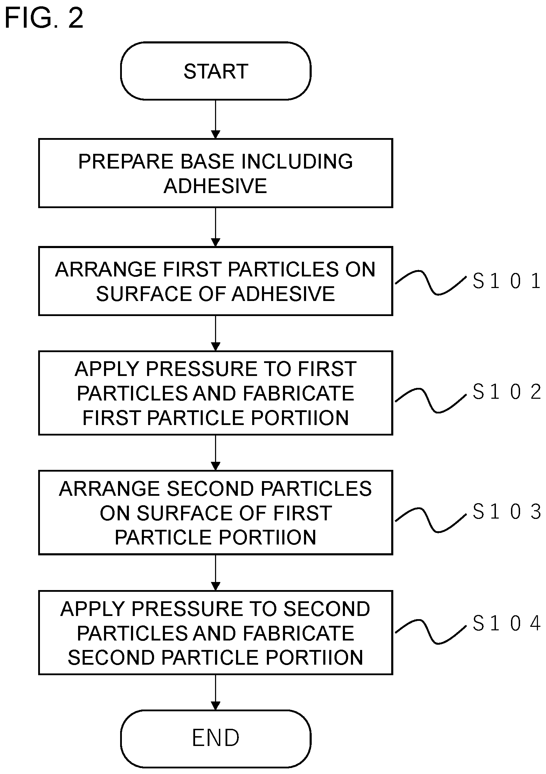

Hereinafter, an example of a manufacturing method of the solid electrolyte base material will be described in detail with reference to FIG. 2. While a solid electrolyte base material using a solid electrolyte particle in the first particle portion and the second particle portion will be described as an example below, the solid electrolyte base material can be manufactured in a similar manner by using a resin particle in the first particle portion.

The manufacturing method of the solid electrolyte base material in which the base, the adhesive, the first particle portion, and the second particle portion are stacked in this order preferably includes steps (1) to (5) below.
(1) Preparation step of preparing the base including the adhesive.
(2) First step of arranging the first particle on the surface of the adhesive (S101 in FIG. 2).
(3) Second step of fabricating the first particle portion by applying pressure to the first particle (S102 in FIG. 2).
(4) Third step of arranging the second particle on the surface of the first particle portion (S103 in FIG. 2).
(5) Fourth step of fabricating the second particle portion by applying pressure to the second particle and obtaining the solid electrolyte base material (S104 in FIG. 2).

### Preparation Step

As the preparation step, the base including the adhesive is prepared. Note that in the present disclosure, "including the adhesive" indicates that the adhesive is provided in a part of or all of the surface of the base.

As the base, the base described above can be used. Although a method of providing the adhesive is not particularly limited, a method such as applying the adhesive to the surface of the base is preferable.

The adhesive is not particularly limited and known adhesives can be used. For example, the adhesive may be an acrylic pressure sensitive adhesive, a rubber-based pressure sensitive adhesive, a silicone-based pressure sensitive adhesive, or a thermoplastic resin or a light-curable resin of which adhesive power changes due to external disturbances such as heat or light. The adhesive is as described earlier and is preferably a pressure sensitive adhesive. Elastic holding can be readily performed by an adhesive with tackiness.

### First Step, Second Step, Third Step, and Fourth Step

The first step is a step of arranging the first particle on the surface of the adhesive on the base. The particle is preferably arranged so as to prevent the adhesive from being exposed. A thickness of the first particle preferably ranges from 1 to 20 µm, more preferably ranges from 2 to 15 µm, and even more preferably ranges from 3 to 10 µm.

The second step is a step of fixing the first particle to be elastically held by the adhesive. Pressure is not particularly limited as long as the pressure enables the first particle to be elastically held. The first particle can be readily held with a certain amount of force. The pressure preferably ranges from 5 to 300 kPa and more preferably ranges from 100 to 300 kPa.

The third step is a step of arranging the second particle on the first particle portion. The second particle may be arranged to the extent that is sufficient to form a green compact. A thickness of the second particle is preferably 10 µm or more and less than 100 µm, more preferably ranges from 20 to 90 µm, and even more preferably ranges from 25 to 80 µm.

In addition, the fourth step is a step of applying pressure in a similar manner to the second step to stack the second particle portion on the first particle portion to have the first particle portion hold the second particle portion and fabricating the green compact constituted of the second particle portion. Pressure should be applied to the extent that the green compact is formed, and although the pressure in the fourth step is also not particularly limited, the pressure preferably ranges from 5 to 300 kPa and more preferably ranges from 100 to 300 kPa.

### Electrolyte Base Material Manufacturing Method 2

When using the same solid electrolyte particle for the first and second particle, after the first step of arranging the solid electrolyte particle on the surface of an adhesive portion, the second and third steps are omitted and only the fourth step is performed. Accordingly, a part of the solid electrolyte particle is elastically held by the adhesive on the base to form the first particle portion, and the second particle portion which is held by being stacked on the first particle portion and which includes a green compact can be further formed.

In other words, the manufacturing method 2 of the solid electrolyte base material in which the base, the adhesive, and the solid electrolyte particle are stacked in this order may include steps (1) to (3) below.
(1) Preparation step of preparing the base including the adhesive.
(2) Step of arranging the solid electrolyte particle on the surface of the adhesive.
(3) Step of fabricating a particle portion of the solid electrolyte particle by applying pressure to the solid electrolyte particle and obtaining the solid electrolyte base material.

In addition, the manufacturing method 2 of the solid electrolyte base material in which the base, the adhesive, and the solid electrolyte particle are stacked in this order preferably includes steps (1) to (3) below.
(1) Preparation step of preparing the base including the adhesive.
(2) Step of arranging the solid electrolyte particle on the surface of the adhesive.
(3) Step of fabricating the first particle portion held by the adhesive and the second particle portion containing a green compact of the solid electrolyte particle by applying pressure to the solid electrolyte particle and obtaining the solid electrolyte base material.

A thickness of the solid electrolyte particle is preferably 10 µm or more and less than 100 µm, more preferably ranges from 20 to 90 µm, and even more preferably ranges from 25 to 80 µm. The pressure in step (3) preferably ranges from 5 to 300 kPa and more preferably ranges from 100 to 300 kPa.

While a particle size of the first particle is not particularly limited, for example, a cumulative 10% particle size (r10) in a volume-based particle size distribution of a primary particle preferably ranges from 0.1 to 10.0 µm and more preferably ranges from 1.0 to 7.0 µm. In addition, a cumulative 50% particle size (r50) in the volume-based particle size distribution of the primary particle preferably ranges from 0.5 to 20.0 µm and more preferably ranges from 2.0 to 10.0 µm. Furthermore, a cumulative 90% particle size (r90) in the volume-based particle size distribution of the primary particle preferably ranges from 2.0 to 20.0 µm and more preferably ranges from 3.0 to 15.0 µm.

The second particle is a solid electrolyte particle. For example, the solid electrolyte particle described above can be used as the second particle.

A particle size of a primary particle of the second particle is not particularly limited. For example, a cumulative 10% particle size (r10) in a volume-based particle size distribution of the primary particle of the second particle preferably ranges from 0.1 to 10.0 µm and more preferably ranges from 1.0 to 7.0 µm. In addition, a cumulative 50% particle size (r50) in the volume-based particle size distribution of the primary particle preferably ranges from 0.5 to 20.0 µm and more preferably ranges from 2.0 to 10.0 µm. Furthermore, a cumulative 90% particle size (r90) in the volume-based particle size distribution of the primary particle preferably ranges from 2.0 to 20.0 µm and more preferably ranges from 3.0 to 15.0 µm.

A ratio of the first particle size to the second particle size is not particularly limited.

### Solid Electrolyte Base Material Manufacturing Apparatus 1

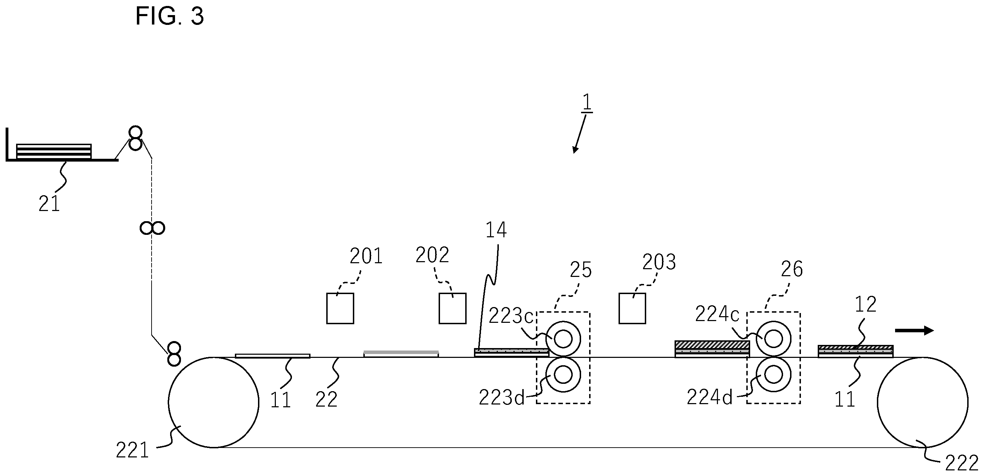

FIG. 3 is a diagram schematically showing a configuration of a solid electrolyte base material manufacturing apparatus 1. The solid electrolyte base material manufacturing apparatus 1 is an apparatus that forms a first particle portion 14 and a second particle portion 12 on the base 11. The solid electrolyte base material manufacturing apparatus 1 includes a storage container 21 that stores and supplies the base 11 and a belt apparatus 22 that conveys the base 11. In addition, the solid electrolyte base material manufacturing apparatus 1 includes a liquid dispensing apparatus 201 that arranges a liquid for providing an adhesive to the base 11. The belt apparatus is provided with, in order from an upstream side, the liquid dispensing apparatus 201, a first particle dispensing apparatus 202 that stacks the first particle, and a particle fixing apparatus 25. In addition, a second particle dispensing apparatus 203 that stacks the second particle and a particle fixing apparatus 26 are provided further downstream.

As the liquid dispensing apparatus 201, while an inkjet apparatus that ejects liquid or an apparatus that applies liquid can be used, a plate-based method such as flexography can also be used. Among these apparatuses, inkjet apparatus that ejects liquid is preferably used as the liquid dispensing apparatus.

As the inkjet apparatus that ejects liquid, for example, apparatuses that employ various ejection methods such as a thermal type, a piezo type, an electrostatic type, and a continuous type can be used.

The liquid for providing the adhesive to be dispensed by the liquid dispensing apparatus 201 may be either water-based or oil-based as long as the liquid contains a material capable of holding the first particle that can form the first particle portion. Materials that do not react with the first particle and the like are selected as appropriate. In addition, the liquid dispensing apparatus 201 may form patterns using a plurality of types of liquid. For example, the liquid dispensing apparatus 201 may dispense two types of liquids that react with the base material 11 to enhance its tackiness. Materials capable of adhering to the first particle include resins such as acrylic resin.

The first particle dispensing apparatus 202 arranges powder containing the first particle onto the base 11 on which the adhesive has been stacked. Accordingly, the first particle is fixed by the material on the base 11.

The powder dispensing means by the first particle dispensing apparatus 202 may employ means of blowing the powder toward the base 11 or means of sprinkling the powder. The first particle dispensing apparatus 202 may further include means of removing the first particle not fixed to the base 11 by means such as vibration, centrifugation, air blowing, or suction.

The particle fixing apparatus 25 includes pressure rollers 223c and 223d and the pressure roller 223d is driven to rotate. At least one of the pressure rollers 223c and 223d favorably uses a soft roller having an elastic layer on a surface layer and, for example, a soft roller in which an elastic layer of silicone rubber or fluororubber is provided on a surface of a stainless steel core metal can be used. In addition, a heater (not illustrated) may be built into at least one of the pressure rollers 223c and 223d.

The base 11 is conveyed to a pressurization unit between the pressure rollers 223c and 223d by the belt apparatus. When the base material 11 is pressurized by the pressure rollers 223c and 223d, the first particle arranged on the surface of the adhesive on the base are held by the adhesive on the base and the first particle portion is formed. At this point, rearrangement of the particle of the adhesive on the base may be facilitated by the heater described above. In addition, a heating source may be provided in an upstream portion of the particle fixing apparatus 25 to heat the adhesive on the base material. The pressure applied by the pressure rollers is preferably within the ranges described above.

The base 11 carrying the first particle portion 14 is conveyed to the second particle dispensing apparatus 203 by the belt apparatus. The second particle dispensing apparatus 203 arranges powder containing the second particle onto the base 11 on which the first particle portion 14 is present.

Next, the base 11 to which the second particle has been dispensed is conveyed to a pressurization unit between pressure rollers 224c and 224d by the belt apparatus 22. In a similar manner to the particle fixing apparatus 25, the particle fixing apparatus 26 includes the pressure rollers 224c and 224d and the pressure roller 224d is driven to rotate. When the base 11 is pressurized by the pressure rollers 224c and 224d, the second particle portion 12 is formed by the second particle on the first particle portion 14 on the base.

The solid electrolyte base material manufacturing apparatus 1 may further include a drying apparatus that evaporates at least a portion of the liquid dispensed by the liquid dispensing apparatus 201 to control an amount, a thickness, or the like of the material on the base 11. The drying apparatus may be provided on a downstream side of the liquid dispensing apparatus 201. The material on the base after drying may be a liquid, a liquid containing solid components, or solid components alone.

Since the pressure roller 223c and the pressure roller 224c come into contact with the particle on the base, surfaces of the pressure rollers are preferably coated with a material such as fluorine that has good release properties to suppress particle adhesion. In addition, a cleaning mechanism for removing a particle adhering to the pressure rollers 223c and 224c may be provided. It is further preferable to apply pressure while the particle layer is covered with a protective material (not illustrated).

At this point, a protective material with good release properties is preferably used and fluorinated sheets are preferable in the case of resins while nichrome foil and the like are preferable in the case of metals. When using the protective material, a removal mechanism (not illustrated) that removes the protective material is provided on a downstream side of the particle fixing apparatus 25 and on an upstream side of the second particle dispensing apparatus 203.

### Solid Electrolyte Base Material Manufacturing Apparatus 2

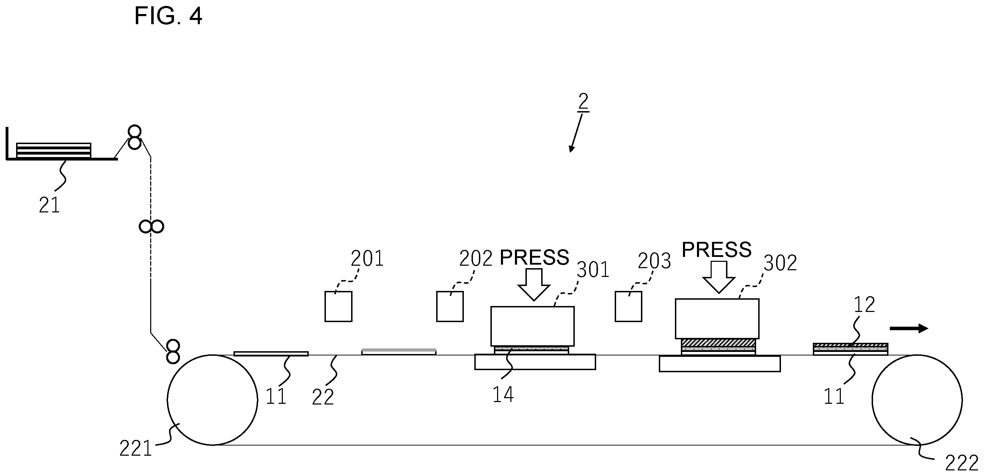

FIG. 4 is a diagram schematically showing a configuration of a solid electrolyte base material manufacturing apparatus 2. The solid electrolyte base material manufacturing apparatus 2 is an apparatus that forms a solid electrolyte layer 12 on the base 11 in the same manner as the solid electrolyte base material manufacturing apparatus 1 and includes the storage container 21 that stores and supplies the base 11 and the belt apparatus 22 that conveys the base 11. In addition, the solid electrolyte base material manufacturing apparatus 2 includes the liquid dispensing apparatus 201 that arranges a liquid for providing an adhesive portion on the base 11. The belt apparatus is provided with, in order from an upstream side following the liquid dispensing apparatus 201, the first particle dispensing apparatus 202, a particle fixing apparatus 301, and downstream thereto, the second particle dispensing apparatus 203 and a particle fixing apparatus 302.

The difference from the solid electrolyte base material manufacturing apparatus 1 is that the step of fixing s particle uses a press to fix the particle, and the configuration is otherwise the same. The pressure applied during pressing is preferably also within the range described above. Pressure is preferably 5 kPa or higher, and while dependent on the strength of the base, pressure is preferably 300 kPa or lower when using a PET film in order to prevent damage. More preferably, the pressure ranges from 100 to 300 kPa.

### Other Solid Electrolyte Base Material Manufacturing Apparatuses

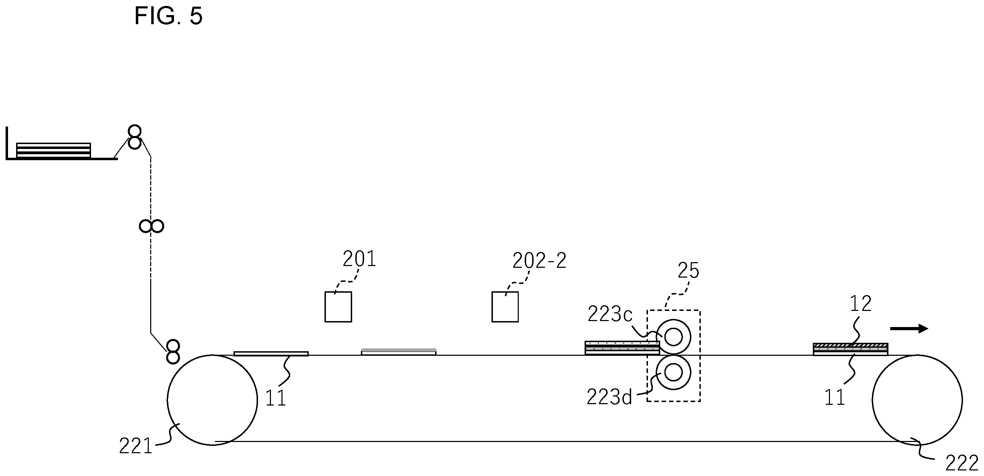

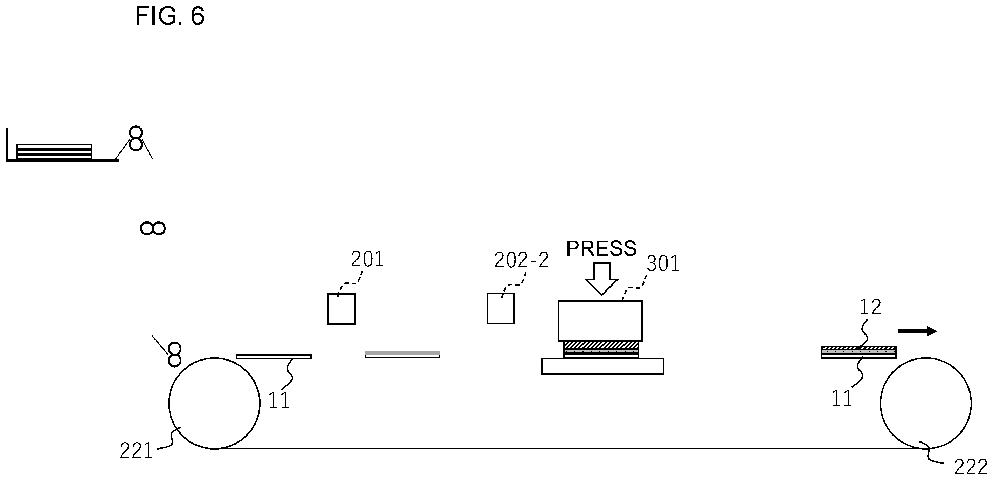

FIGS. 5 and 6 are schematic views of a solid electrolyte base material manufacturing apparatus when using the same particle for both the first particle and the second particle. Since the same particle is used, respectively, only one particle dispensing apparatus 202-2 is required. In addition, a particle is fixed with a pressure roller in FIG. 5 while a particle is fixed with a press in FIG. 6.

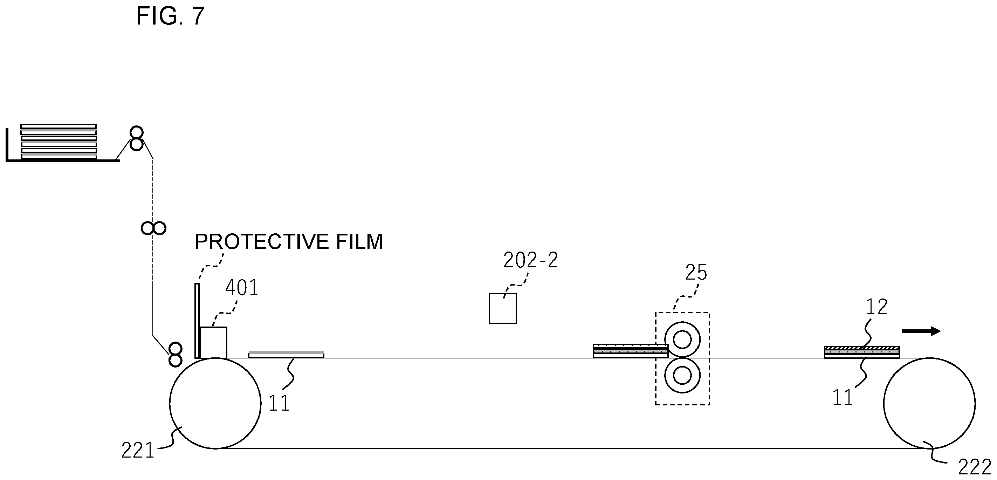

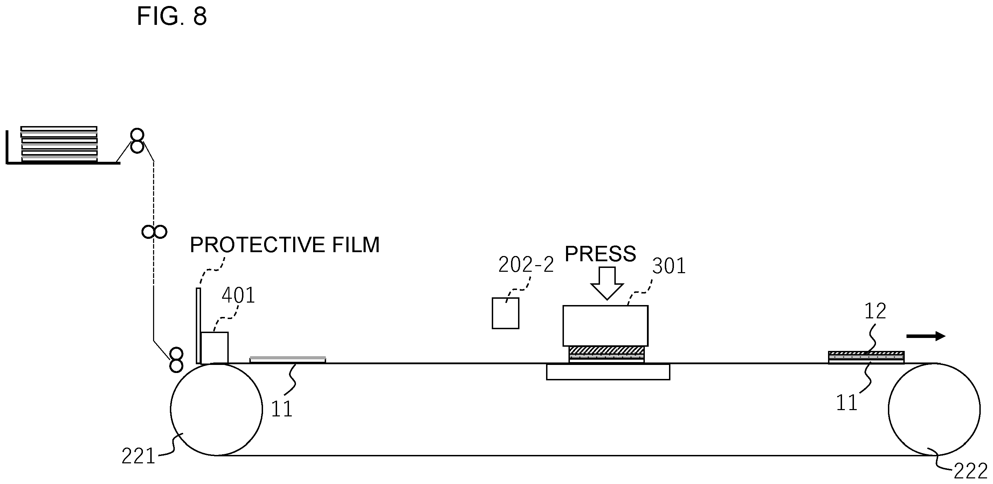

FIGS. 7 and 8 show a solid electrolyte base material manufacturing apparatus using a base to which an adhesive has already been applied. Since the adhesive is applied to the base 11 in advance, the base is covered with a protective film. The protective film is removed by a protective film removing mechanism 401 and the processing proceeds to a next step.

In the solid electrolyte base material, a coverage rate of the base surface by the solid electrolyte particle is preferably 60% by area or more, more preferably 70% by area or more, and even more preferably 80% by area or more.

In the present disclosure, the coverage rate of the base surface refers to a ratio (% by area) of the area covered by the solid electrolyte particle to the total area of the base surface. The coverage rate of the base surface by the solid electrolyte particle can be measured by photographing a region in which a particle layer is formed with an optical microscope from a vertical direction to the base material and calculating the ratio of an area of the region covered by the solid electrolyte particle with image processing software. Details of the measuring method will be provided later.

While an upper limit of the coverage rate is not particularly limited, the upper limit is preferably 99% by area or lower and more preferably 98% by area or lower. For example, the coverage rate of a resin base material surface by the solid electrolyte particle preferably ranges from 60 to 99% by area, from 70 to 99% by area, from 80 to 99% by area, from 60 to 98% by area, from 70 to 98% by area, or from 80 to 98% by area.

When the coverage rate is in the ranges described above, a dense particle layer is formed on the base and a denseness of a particle in the solid electrolyte layer can be improved. As a result, ionic conductivity can be further improved.

### Solid Electrolyte Layer Manufacturing Method

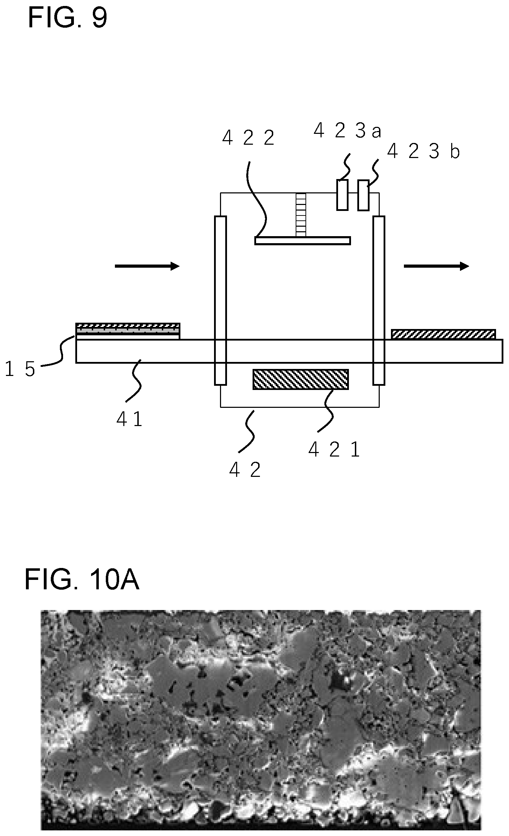

Hereinafter, an example of a manufacturing method of the solid electrolyte layer will be described in detail with reference to FIG. 9.

The manufacturing method of the solid electrolyte layer includes the two steps (step A and step B) below.

(Step A) Step A of removing the base from the solid electrolyte base material and molding a solid electrolyte integrated object.

(Step B) Step B of sintering the solid electrolyte integrated object and obtaining a solid electrolyte layer.

In other words, a step of removing the base and obtaining an integrated object and the solid electrolyte layer manufactured by a sintering method from the integrated object can be used as the solid electrolyte.

Hereinafter, details of each step of the manufacturing method of the solid electrolyte layer will be described.

### Manufacturing Method of Solid Electrolyte Layer - Step A

Step A is a step of molding the solid electrolyte integrated object from the solid electrolyte base material and is a step of removing the base. Note that when a resin particle is used in the first particle portion, a resin component of the resin particle and a resin component of the adhesive are preferably also removed with the base. Therefore, the base to be removed at this time is the resin components including the base. The base is preferably removed by heating. FIG. 9 is a diagram schematically showing a configuration of a sintering treatment apparatus. The sintering treatment apparatus includes a conveying apparatus 41 that conveys the solid electrolyte base material 15 and a heating furnace 42 that heats a laminated body 15.

The solid electrolyte base material may be stacked in plurality prior to step A. The number of stacks is not particularly limited and may be determined according to a desired capacity of the solid electrolyte.

The conveying apparatus 41 receives the fabricated solid electrolyte base material 15 and conveys the solid electrolyte base material 15 to the heating furnace 42. Preferably, the conveying apparatus 41 is an apparatus capable of conveying the solid electrolyte base material 15. Examples of an apparatus capable of conveying the solid electrolyte base material 15 include a conveyor belt, a roller, and a robotic arm.

The heating furnace 42 is a furnace that heats the solid electrolyte base material 15. The heating furnace 42 includes heating means 421, pressurizing means 422, and atmosphere adjusting means 423. As the heating furnace 42, a firing furnace used for firing ceramics and the like can be used. The pressurizing means 422 pressurizes the laminated body 15 heated in the heating furnace 42 or pressurizes the laminated body 15 before or after heating.

Note that the pressurizing means 422 includes a pressing unit that pressurizes the laminated body 15 and the pressing unit is preferably formed of a porous body that readily allows gas to pass through. The atmosphere adjusting means 423 includes atmospheric gas supply means 423a and depressurizing means 423b, and adjusts the atmospheric gas within the treatment space of the heating furnace 42.

While an oxidizing atmosphere (O₂), an inert atmosphere (Ar, N₂, or the like), or a reducing atmosphere (Ar-H₂) can be used as the atmospheric gas, sintering may also be performed under atmospheric conditions.

During sintering, heating is preferably performed at a temperature equal to or higher than a decomposition temperature of the base 11 in the solid electrolyte base material, and heating is preferably performed at a temperature below the decomposition temperature of each particle layer in the solid electrolyte base material. The temperature at which the solid electrolyte base material is heated preferably ranges from 200°C to 1000°C and more preferably ranges from 400°C to 800°C. The sintering temperature is preferably maintained for 30 minutes or longer and more preferably maintained for 1 hour or longer. Heating need only be performed for a time sufficient for removing the base, and while an upper limit is not particularly limited, heating is preferably performed for 3 hours or less and more preferably performed for 2 hours or less.

A decomposition temperature refers to a temperature at which weight loss of materials begins when the temperature is gradually increased under the atmosphere during heating in a sintering treatment apparatus. Therefore, heating the solid electrolyte base material at a temperature equal to or higher than the decomposition temperature of the base enables the base of the solid electrolyte base material to be decomposed and removed.

While the heating temperature is preferably a temperature equal to or higher than the decomposition temperature of the base, heating is preferably performed at an even higher temperature than the decomposition temperature. Specifically, when performing thermogravimetric analysis by raising the temperature at a rate of 5°C/min from room temperature (25°C) under the atmosphere (typically, air) used during heating in the sintering treatment apparatus, heating is preferably performed at a temperature exceeding a temperature at which 70% by mass of an initial mass is reached. Specifically, for example, the temperature is 385°C or higher.

Furthermore, when performing thermogravimetric analysis in a similar manner, heating is more preferably performed at a temperature exceeding a temperature at which 50% by mass of the initial mass is reached, and even more preferably performed at a temperature exceeding a temperature at which 20% by mass of the initial mass amount is reached. Specifically, for example, the temperature is preferably 400°C or higher and more preferably 450°C or higher. Accordingly, the time required to remove the base can be shortened or a removal rate of the base can be increased.

In this manner, when the sintering treatment apparatus removes the base by heating, the solid electrolyte particle preferably has a higher decomposition temperature than the base.

When stacking the solid electrolyte base material in plurality, the sintering treatment apparatus preferably removes at least a part of the base in the solid electrolyte base material by heating, and a portion where particles of upper and lower stacked solid electrolyte layers come into contact with each other is preferably provided. Therefore, preferably 90% by mass or more of the base in the solid electrolyte base material 15 is removed, more preferably 95% by mass or more of the base is removed, and even more preferably 97% by mass or more of the base is removed. In doing so, the base is preferably combusted or gasified and released externally as a gas. At this point, the gas having been gasified by thermal decomposition is preferably released to the outside of the apparatus.

The sintering treatment apparatus preferably discharges the released gas to outside of the heating furnace 42 with the depressurizing means 423b. By maintaining the interior of the heating furnace 42 in an oxidizing atmosphere or, in other words, an atmosphere containing oxygen gas such as air using the atmospheric gas supply means 423a or the like, the base can be combusted and removed. On the other hand, certain a solid electrolyte particle may decompose or undergo compositional changes when sintered in an oxidizing atmosphere. In such a case, sintering is preferably performed in an inert atmosphere (Ar, N₂, or the like) or a reducing atmosphere (Ar-H₂).

When the base gasifies and is released as a gas from the solid electrolyte base material 15 due to thermal decomposition, the particle layer in the solid electrolyte base material may be pushed upward, causing the shape of the solid electrolyte base material to change. Therefore, when performing heating in the heating furnace 42, the solid electrolyte base material 15 may be pressurized by the pressurizing means 422 before or during heating.

### Manufacturing Method of Solid Electrolyte Layer - Step B

Step B is a step of sintering the solid electrolyte integrated object obtained by removing the base to sinter and bond the solid electrolyte particles together and to fabricate a solid electrolyte layer. In doing so, the step involves heating to the respective sintering temperatures corresponding to each type of solid electrolyte. In addition, while there is no particular issue when using solid electrolytes with high thermal stability at elevated temperatures, when using solid electrolytes that become thermally unstable, only the solid electrolyte integrated object is preferably sintered prior to step B. When using a resin film as the base, since the resin film is conceivably thermally decomposed in step A, the solid electrolyte integrated object can proceed directly to step B.

In addition, the solid electrolyte integrated object may be separately pressurized by a pressing apparatus after removing the base prior to step B. As a specific pressurizing method, pressurization is preferably performed by vacuum degassing or isostatic pressing or by using conventional hydraulic presses and roller presses. Among these methods, pressurization is preferably performed by combining vacuum degassing and isostatic pressing.

Pressurization is preferably performed within a range of 5 MPa to 500 MPa. Accordingly, voids in the solid electrolyte integrated object from which the base has been removed are filled and denseness and strength of a stereoscopic object improve.

The solid electrolyte layer can be manufactured by a manufacturing method including the steps described above.

Adopting such a configuration enables a resistance value of the solid electrolyte to be reduced.

### Manufacturing Method of Secondary Battery

A secondary battery can be manufactured using the solid electrolyte layer fabricated by the method described above and using a positive electrode or negative electrode formed separately by a separate current collector or other means. The secondary battery includes at least the solid electrolyte layer described above and, as necessary, electrodes and current collectors.

The secondary battery includes a laminated body constituted of electrodes, current collectors, and the solid electrolyte layer. The secondary battery may be manufactured by packaging the laminated body using an aluminum laminate film or the like as needed and by molding and pressurizing the laminated body. In other words, the manufacturing method of the secondary battery may include a step of stacking electrodes, current collectors, and the solid electrolyte layer. As the solid electrolyte, the solid electrolyte layer described above can be used.

In addition, the manufacturing method of a secondary battery may include a step of preparing a solid electrolyte layer by the manufacturing method of a solid electrolyte layer and a step of providing the solid electrolyte layer adjacent to the electrodes. Alternatively, the manufacturing method of a secondary battery may include a step of collectively providing the electrodes and the solid electrolyte layer adjacent to the electrodes. In other words, the electrodes and the solid electrolyte layer may be respectively prepared in separate steps or may be collectively prepared in a same step.

Here, alternative means of forming electrodes include known means such as pelletizing a positive electrode material particle and a negative electrode material particle using an uniaxial pressing apparatus or the like and then sintering in an electric furnace or the like. A sheet or the like may be used.

The secondary battery can be formed by stacking the manufactured components in the following order: positive current collector, positive electrode, solid electrolyte layer, negative electrode, and negative current collector. For example, a laminate-type secondary battery in which the laminated body is packaged in a laminate film or a coin-type secondary battery in which the laminated body is packaged in a coin case can be manufactured.

The respective particle constituting the positive electrode, the solid electrolyte, and the negative electrode may require different optimal temperatures and atmospheres during sintering. When handing such a material, preferably, the positive electrode, the solid electrolyte, and the negative electrode that are separate members are separately manufactured and then assembled as a battery. In addition, when using lithium metal or indium as the negative electrode, preferably, the negative electrode is used as a metal foil and formed into the current collector and the electrolyte using vacuum processes such as sputtering. Due to its strong reducing power, lithium metal is prone to decomposition depending on the solid electrolyte species. In such a case, a buffer layer may be provided between the electrodes and the solid electrolyte. As the buffer layer, a polymer electrolyte or the like is preferably used.

A secondary battery can also be manufactured as a three-dimensional object by forming a laminated body including two or more of the following: a positive electrode current collector, a positive electrode, a solid electrolyte layer, a negative electrode, and a negative electrode current collector.

For example, a base material of each component is fabricated using a separate particle layer. That is, the positive electrode current collector base material, the positive electrode base material, the solid electrolyte base material, the negative electrode base material, and the negative electrode current collector base material. Each base material may include a plurality of types of particles (in the case of the positive electrode base material, a positive electrode active material particle and a solid electrolyte particle) or include only a single type of a particle.

The negative electrode base material is formed of a particle layer that includes at least a negative electrode active material particle. The current collector base material is formed of a particle layer that includes at least a conductive particle. A secondary battery can be manufactured by fabricating a laminated body by stacking these base materials using a stacking unit or the like in the following order: the positive electrode current collector base material, the positive electrode base material, the solid electrolyte base material, the negative electrode base material, and the negative electrode current collector base material, removing resin components such as the base, and performing post-processing. Furthermore, a bipolar secondary battery can also be manufactured by stacking electrode base materials onto both sides of the current collector base material.

### EXAMPLES

Hereinafter, while the present invention will be described in further detail using examples, it is to be understood that the present invention is not limited by the examples. In the following examples, the parts are based on mass parts unless otherwise noted.

Specifically, a solid electrolyte base material was fabricated using the systems shown in FIGS. 4 and 8.

### Example 1

Example 1 used the system shown in FIG. 4. A 3-µm polyester (PET) sheet (Lumirror, manufactured by Toray Industries, Inc.) was used as the base. An acrylic pressure sensitive adhesive (T-50, manufactured by Toagosei Co., Ltd.) was applied to the base as an adhesive to achieve a thickness of 1 µm after drying.

2-µm polyacrylic resin particle (MV1002, manufactured by Nippon Shokubai Co., Ltd.) was used as the first particle and coated to achieve a thickness of 5 µm for the first particle portion. The pressing conditions after coating the first particle were set to achieve 250 kPa.

In addition, Li_{1.5}Al_{0.5}Ge_{1.5}P₃O₁₂ (hereinafter, also described as LAGP) powder was used as the second particle and coated to achieve a thickness of 70 µm for the second particle portion. The pressing conditions after coating the second particle were set to 250 kPa to obtain the solid electrolyte base material.

Subsequently, using the system shown in FIG. 9, the base, the pressure sensitive adhesive, and the resin particle which are resin components were removed by heating from the obtained solid electrolyte base material to fabricate a solid electrolyte integrated object, and the solid electrolyte integrated object was pressurized and then sintered once again to obtain a solid electrolyte layer. Heating to remove the base was performed in air as the sintering atmosphere at a temperature (maintained for 1 hour) of 500°C. In addition, sintering to form the solid electrolyte layer was performed at 850°C.

### Example 2

The base and the adhesive used were the same as in Example 1. Same LAGP was used as the first particle and the second particle. Therefore, the solid electrolyte base material was fabricated using the system in FIG. 8. The pressing conditions were set to achieve 250 kPa. In addition, a total thickness of the first particle portion and the second particle portion was set to the values listed in Table 1. Other conditions were the same as in Example 1.

### Example 3

The base and the adhesive used were the same as in Example 1. Li_{5.9}Yb_{0.81}La_{0.09}Zr_{0.1}(BO₃)₃ (manufactured by CANON INC.: Hereinafter, also described as LYbBO) was used as the first particle and the second particle. Other conditions were the same as in Example 2. Conditions of base removal and the like are listed in Table 1.

### Example 4

The base and the adhesive used were the same as in Example 1. Li₃BO₃ (hereinafter, also described as LBO) was used as the first particle and the second particle. Other conditions were the same as in Example 2. Conditions of base removal and the like are listed in Table 1.

### Example 5

The base and the adhesive used were the same as in Example 1. Li₇La₃Zr₂O₁₃ (hereinafter, also described as LLZ) was used as the first particle and the second particle. Other conditions were the same as in Example 2. Conditions of base removal and the like are listed in Table 1.

### Example 6

The base and the adhesive used were the same as in Example 1. LYbBO was used as the first particle and the second particle. Unlike Example 3, the total thickness of the first particle portion and the second particle portion was adjusted to 30 µm. Other conditions were the same as in Example 2. Conditions of base removal and the like are listed in Table 1.

### Comparative Example 1

The base and the adhesive used were the same as in Example 1. LAGP was used as the first particle and the second particle. The total thickness of the particle portion was adjusted to 5 µm. Other conditions were the same as in Example 2. Conditions of base removal and the like are listed in Table 1.

In Comparative Example 1, the second particle portion was not formed because the particle portion was thin.

### Comparative Example 2

The base and the adhesive used were the same as in Example 1. LYbBO was used as the first particle and the second particle. The total thickness of the particle portion was adjusted to 5 µm. Other conditions were the same as in Example 2. Conditions of base removal and the like are listed in Table 1.

In Comparative Example 2, the second particle portion was not formed because the particle portion was thin.

### Comparative Example 3

Without using a base or an adhesive, the total thickness of the particle portion was adjusted to 70 µm using only LAGP to obtain a solid electrolyte base material. The pressing conditions were set to achieve 12000 kPa. Other conditions were the same as in Example 2.

### Comparative Example 4

Without using a base or an adhesive, the total thickness of the particle portion was adjusted to 70 µm using only LYbBO. The pressing conditions were set to achieve 12000 kPa. Other conditions were the same as in Example 3.

### Comparative Example 5

The base used was the same as in Example 2 but an adhesive was not used. LAGP was used as the particle. The pressing conditions were set to achieve 250 kPa. Other conditions were the same as in Example 2. Therefore, in Comparative Example 5, the first particle portion was not formed and only a green compact by LAGP was formed on the base.

### Comparative Example 6

The base and the adhesive used were the same as in Example 2. LAGP was used as the particle. The second particle was not used and pressing was performed at 250 kPa so that the thickness of the adhesive in which the first particle portion was dispersed became 70 µm. Other conditions were the same as in Example 2. Therefore, in Comparative Example 6, the second particle portion was not formed.

### Example 7

The base and the adhesive used were the same as in Example 1. LYbBO was used as the particle. The total thickness of the first particle portion and the second particle portion was adjusted to 150 µm. Conditions of base removal and the like are listed in Table 1. Other conditions were the same as in Example 2.

### Comparative Example 7

A base and an adhesive were not used, and LYbBO was used as the first particle and the second particle. The total thickness of the particle portions was adjusted to 150 µm to obtain the solid electrolyte base material. Conditions of sintering and the like are listed in Table 1. The pressing conditions were set to achieve 12000 kPa. Other conditions were the same as in Example 3.

**Table 1**

| | Base + adhesive | First particles | Second particles | Base removal temperature °C | Resin component removal time | Sintering temperature | Sintering time | Thickness µm | | |
|---|---|---|---|---|---|---|---|---|---|---|
| | | | | | | | | First particle portion | Second particle portion | Total |
| Example 1 | Present | Polyacrylic | LAGP | 500 | 1h | 850°C | 12h | 5 | 70 | 75 |
| Example 2 | Present | LAGP | LAGP | 500 | 1h | 850°C | 12h | - | - | 70 |
| Example 3 | Present | LYbBO | LYbBO | 500 | 1h | 650°C | 12h | - | - | 70 |
| Example 4 | Present | LBO | LBO | 500 | 1h | 650°C | 12h | - | - | 70 |
| Example 5 | Present | LLZ | LLZ | 500 | 1h | 1200°C | 12h | - | - | 70 |
| Example 6 | Present | LYbBO | LYbBO | 500 | 1h | 650°C | 12h | - | - | 30 |
| Comparative Example 1 | Present | LAGP | LAGP | 500 | 1h | 850°C | 12h | - | - | 5 |
| Comparative Example 2 | Present | LYbBO | LYbBO | 500 | 1h | 650°C | 12h | - | - | 5 |
| Comparative Example 3 | Absent | LAGP | LAGP | - | - | 850°C | 12h | - | - | 70 |
| Comparative Example 4 | Absent | LYbBO | LYbBO | - | - | 650°C | 12h | - | - | 70 |
| Comparative Example 5 | Absent | LAGP | LAGP | 500 | 1h | 850°C | 12h | - | - | 70 |
| Comparative Example 6 | Present | LAGP | LAGP | 500 | 1h | 850°C | 12h | - | - | 70 |
| Example 7 | Present | LYbBO | LYbBO | 500 | 1h | 650°C | 12h | - | - | 150 |
| Comparative Example 7 | Absent | LYbBO | LYbBO | - | - | 650°C | 12h | - | - | 150 |

Regarding thickness, examples fabricated using the system shown in FIG. 8 list only the total thickness.

Table 2 lists evaluation results for the examples, the comparative examples, and the reference examples. In addition, evaluation methods will be described.

### • Handleability

A flat plate-shaped solid electrolyte base material(10 mm square) obtained before base removal (before firing) was evaluated by pinching its center with tweezers to determine whether cracks formed. Items without cracks were designated as A, items without cracks but with warping were designated as B, and items with cracks were designated as C.

### • Measurement of Resistance Value

After removing the base, gold electrodes with a diameter of Φ3 were deposited on top and bottom surfaces of a flat plate-shaped sintered body obtained by sintering using a magnetron sputtering system MSP-10 manufactured by Vacuum Device Inc., and were then used as samples for AC impedance measurement. Measurements were performed using a potentiostat/galvanostat SI1287A and a frequency response analyzer 1255B manufactured by Solartron Analytical.

Measurement conditions were set at room temperature and a frequency range of 1 MHz to 0.1 Hz. Resistance values were calculated from a complex impedance plot obtained by impedance measurement. Among resistance values (Ω) obtained by a Z parallel circuit, resistance values (Ω) of 10,000 or less were designated as A, resistance values exceeding 10,000 were designated as B, and items that leaked and could not be measured were designated as C. In addition, items with cracks could not be measured and were designated as C.

### • Difference in Area Ratios Between First Particle Layer and Second Particle Layer

Differences were determined through BIB-SEM photography and image processing.

### Photography Method of BIB-SEM

Area ratios in the solid electrolyte base material were determined using BIB-SEM images. Hereinafter, photographing conditions of BIB-SEM will be described.

Samples were prepared by vacuum-packing and isotropically pressurizing solid electrolyte base materials fabricated on a foundation (aluminum foil). The samples were cut with a wire saw (DWS3400: wire diameter 170 µm, diamond diameter 30 µm) along the stacking direction of the base, the first particle portion, and the second particle portion, and the cut surfaces were subjected to cross-section processing using an Ar broad ion beam (Cross Section Polisher SM-09010, manufactured by JEOL). Conditions of the cross-section processing were set to a voltage of 6 kV and a current ranging from 150 to 200 mA. Cross-sectional observation is performed by obtaining cross-sections in the stacking direction as BIB-SEM images.

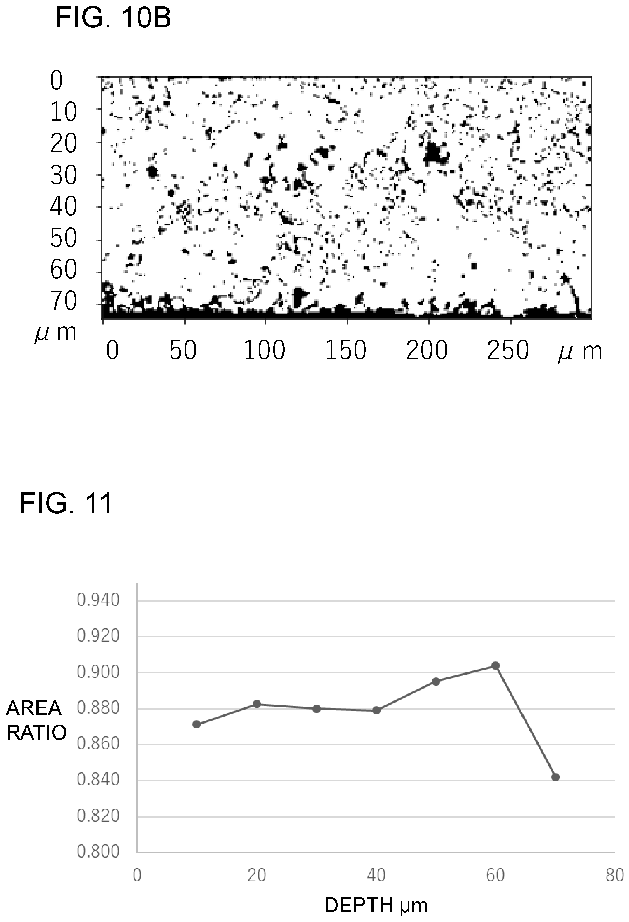

Cross-sectional areas were photographed using an electron microscope (ULTRA55) under the following conditions. Examples of photographed images (Example 2) are shown in FIGS. 10A and 10B.
Detector: ESB (reflected electron image)
Observation condition: acceleration voltage 3 kV
Magnification: 1000 times
Filter: 1500V bias applied to ESB filter

Next, using SEM-EDX (XFlash Detector 630M manufactured by Bruker Corporation), elemental and compositional analysis was performed on each particle on the base to identify the adhesive components and the solid electrolyte particle.

The identification of the base, the adhesive components, and the solid electrolyte particle specifically involves analyzing the base and the adhesive components using X-ray diffraction (XRD) or the like to identify base materials constituting the base and the adhesive components. Subsequently, specific elements contained in the solid electrolyte particle are detect and identified using SEM-EDX.

Note that the first particle portion and the second particle portion are divided as follows. As described above, positions up to a maximum height of the particle held by the adhesive are defined as the first particle portion. Therefore, using SEM-EDX, the location of the adhesive is confirmed by observing characteristic elements contained within the adhesive or, specifically, the carbon (C) component. In addition, the particle held by the adhesive is selected and positions up to a maximum height of the particle is defined as the first particle portion. Furthermore, a group of particles on the first particle portion and not in contact with the adhesive is defined as the second particle portion.

### Calculation Method of Ratio of Solid Electrolyte Particles Per Unit Depth

The area ratio occupied by a solid electrolyte particle was detected from the BIB-SEM images photographed under the conditions described above.

First, the BIB-SEM images were normalized to have a mean brightness of 100 and a standard deviation of ±30. To count the solid electrolyte particle on the base, an image representing only the particle layer on the base is extracted from the normalized image so that the image includes all of the particles therein. An example of the extracted image is shown in FIG. 10A.

The extracted image was binarized using a threshold of brightness 70. To remove noise, regions enclosed by white pixels were filled with white, followed by opening processing of a morphological transformation using a 3×3 pixel kernel size, yielding a noise-removed image. An example of the image after noise removal is shown in FIG. 10B.

Next, topmost and bottommost positions of the white pixels in each vertical column within the image above as shown in FIG. 10B are determined and recorded. The topmost position of the white pixels in each vertical column is a value indicating a position of a topmost surface of the solid electrolyte layer, and the bottommost position of the white pixels in each vertical column is a value indicating a position of a bottommost surface of the solid electrolyte layer. In addition, the thickness of the solid electrolyte layer has been revealed to be 70 µm by an SEM image, and the area ratio occupied by the solid electrolyte was calculated in 5 µm increments relative to the thickness.

As shown in FIG. 10B, a specific calculation method involved calculating the area ratio of the white portion (particle portion) in a solid electrolyte layer measuring 300 µm horizontally and 70 µm vertically, using increments of 300 µm horizontally and 5 µm vertically. Note that d1 and d2 adopt the average value of the area ratio measured in increments of 300 µm horizontally and 5 µm vertically.

The results are as shown in FIG. 11. Accordingly, the difference in area ratios between the first particle portion and the second particle portion can be determined. Note that in FIG. 10B, the position of 70 µm (5 µm from bottom) is the first particle portion and the rest is the second particle portion. In addition, multiplying the area ratio values in the vertical columns of FIG. 11 by 100 yields the numerical values for the area percentages corresponding to d1 and d2. In FIG. 11, d1 is 84% and d2 is 88%, and the difference in area ratios (second particle portion - first particle portion) is 4%.

**Table 2**

| | Handleability | Resistance value | Difference in area ratios % |
|---|---|---|---|
| Example 1 | A | A | 4 |
| Example 2 | A | A | 3 |
| Example 3 | A | A | 4 |
| Example 4 | A | A | 3 |
| Example 5 | A | A | 3 |
| Example 6 | A | A | 3 |
| Comparative Example 1 | A | C | - |
| Comparative Example 2 | A | C | - |
| Comparative Example 3 | C | C | - |
| Comparative Example 4 | C | C | - |
| Comparative Example 5 | C | C | - |
| Comparative Example 6 | B | C | - |
| Example 7 | A | B | 4 |
| Comparative Example 7 | B | B | - |

The difference in area ratios represent d2 - d1.

### Example 8

A secondary battery was fabricated using the solid electrolyte layer fabricated in Example 2. A positive electrode using LCO and LAGP was fabricated based on Japanese Patent Application Laid-open No. 2019-137060. In addition, indium foil (thickness 50 µm) was used as the negative electrode. Aluminum foil (thickness 20 µm) was used as the positive electrode current collector. In addition, copper foil (thickness 20 µm) was used as the negative electrode current collector.

The materials described above were stacked in the following order: the positive electrode current collector, the positive electrode, the solid electrolyte layer, the negative electrode, and the negative electrode current collector, and the stacked materials were packaged in an aluminum laminate film so that tab leads for extraction electrodes having been welded to the current collectors beforehand were arranged outside the laminate. Then, the laminate cells were formed using a vacuum packaging machine and pressurized (196 MPa) by an isostatic pressing apparatus to fabricate an all-solid-state secondary battery. Operability of the battery at room temperature was confirmed.

### Example 9

A secondary battery was fabricated using the solid electrolyte layer fabricated in Example 3. A positive electrode using LCO and LYbBO was fabricated based on Japanese Patent Application Laid-open No. 2019-137060. Otherwise, an all-solid-state secondary battery was fabricated in the same manner as Example 7, and operability of the battery at room temperature was confirmed.

While the present disclosure has been described with reference to embodiments, it is to be understood that the present disclosure is not limited to the disclosed embodiments. The scope of the following claims is to be accorded the broadest interpretation so as to encompass all such modifications and equivalent structures and functions.

This application claims the benefit of Japanese Patent Application No. 2023-148390, filed on September 13, 2023, which is hereby incorporated by reference herein in its entirety.

## Claims

1. A solid electrolyte base material used in manufacture of a solid electrolyte, the solid electrolyte base material comprising:
a base;
a first particle portion elastically held on the base by an adhesive; and
a second particle portion which is stacked and held with respect to the first particle portion and which comprises a green compact of a solid electrolyte particle.

2. The solid electrolyte base material according to claim 1, wherein the solid electrolyte particle comprises an oxide-based solid electrolyte particle.

3. The solid electrolyte base material according to claim 1 or 2, wherein a total thickness of the first particle portion and the second particle portion is less than 100 µm.

4. The solid electrolyte base material according to any one of claims 1 to 3, wherein the first particle portion comprises a solid electrolyte particle.

5. The solid electrolyte base material according to any one of claims 1 to 4, wherein
in a cross-sectional observation of the solid electrolyte base material by a scanning electron microscope,
when an area ratio (%) of the first particle portion is denoted by d1 and an area ratio (%) of the second particle portion is denoted by d2, then d1 and d2 differ from each other.

6. The solid electrolyte base material according to claim 5, wherein d1 and d2 satisfy d1 < d2.

7. The solid electrolyte base material according to claim 5 or 6, wherein a difference between d1 and d2 is 2% or more.

8. The solid electrolyte base material according to any one of claims 1 to 7, wherein the adhesive has tackiness.

9. The solid electrolyte base material according to any one of claims 1 to 8, wherein a thickness of the adhesive ranges from 0.5 to 5 µm.

10. A solid electrolyte base material used in manufacture of a solid electrolyte, the solid electrolyte base material comprising:
a base;
a layer of adhesive on the base;
a first particle portion dispersed in and held by the adhesive; and
a second particle portion which is stacked and held with respect to the first particle portion and which comprises a green compact of a solid electrolyte particle.

11. A solid electrolyte obtained by removing at least a part of the base from the solid electrolyte base material according to any one of claims 1 to 10.

12. A secondary battery comprising a solid electrolyte and electrodes arranged in the solid electrolyte, wherein
the solid electrolyte is the solid electrolyte according to claim 11.

13. A manufacturing method of a solid electrolyte base material in which a base, an adhesive, a first particle portion, and a second particle portion are stacked in this order,
the second particle portion comprising a solid electrolyte particle,
the manufacturing method comprising:
a preparation step of preparing the base comprising the adhesive;
a first step of arranging a first particle on a surface of the adhesive;
a second step of fabricating the first particle portion by applying pressure to the first particle;
a third step of arranging a second particle on the surface of the first particle portion; and
a fourth step of fabricating the second particle portion by applying pressure to the second particle and obtaining the solid electrolyte base material.

14. A manufacturing method of a solid electrolyte base material in which a base, an adhesive, and a particle portion are stacked in this order, the manufacturing method comprising:
a step of preparing the base comprising the adhesive;
a step of arranging a solid electrolyte particle on a surface of the adhesive; and
a step of fabricating the particle portion by applying pressure to the solid electrolyte particle and obtaining the solid electrolyte base material.

15. The manufacturing method of a solid electrolyte base material according to claim 13 or 14, wherein the adhesive has tackiness.
